# EUROPEAN PATENT SPECIFICATION

(11) **EP 4 413 289 B1**
(45) Date of publication and mention of the grant of the patent: **17.09.2025**
(21) Application number: 22782551.0
(22) Date of filing: 06.10.2022
(51) Int. Cl.: F17C 1/16

(54) **TYPE V PRESSURE VESSEL HAVING A GAS BARRIER METAL LAYER**
TYP-V-DRUCKBEHÄLTER MIT EINER GASBARRIEREMETALLSCHICHT
RÉCIPIENT SOUS PRESSION DE TYPE V AYANT UNE COUCHE MÉTALLIQUE BARRIÈRE AUX GAZ

(30) Priority: 06.10.2021 LU 102860
(43) Date of publication of application: 14.08.2024
(73) Proprietor: PLASTIC OMNIUM NEW ENERGIES FRANCE, 69007 Lyon (FR)
(72) Inventor: CRIEL, Bjorn, 1130 Bruxelles (BE); DEPARIS, Eric, 1130 Bruxelles (BE)
(74) Representative: LLR
(86) International application number: PCT/EP2022/077775
(87) International publication number: WO 2023/057547

(56) References cited:
- DE-A1- 102018 220 655
- DE-A1- 102019 107 983
- US-A1- 2004 149 759
- US-A1- 2018 282 867

## Description

### Technical field of the invention

The present invention relates to a Type V pressure vessel, a method of manufacturing a Type V pressure vessel, a method of manufacturing a boss assembly for a Type V pressure vessel and a vehicle comprising a Type V pressure vessel.

### Background of the invention

High pressure vessels are used to store and transport any type of gas under pressure. High pressure vessels are typically classified into one of five types: a Type I vessel having an all-metal construction; a Type II having a metal-lined construction with a fiber hoop wrap for reinforcement; a Type III having a metal-lined construction with a complete fiber reinforcement wrap; a Type IV having a plastic-lined construction with a complete fiber reinforcement wrap; and a Type V having a liner-less composite construction. A Type V pressure vessel is a composite pressure vessel utilizing hoop and helical fiber wraps over a liner-less tool that may have a gas barrier layer to prevent gas permeation.

A Type V pressure vessel can be used to store and transport dihydrogen (H₂), to be used in a vehicle equipped with such a pressure vessel for diverse functions, such as source of energy.

US 2021/0197499 A1 discloses a resin material covering an inner surface of a reinforcing body of a high-pressure tank to prevent gas permeation. However, a certain thickness of resin material is required for the high-pressure tank to be gas-tight. This is not satisfactory because it reduces the storage volume available for the gas and it increases the weight of the high-pressure tank. Furthermore, the process of covering a surface with a resin material is a slow process.

US 2004/0149759 A1 discloses a diffusion barrier layer made from a metallic material deposited on an inner surface of a reinforced body of a pressure-resistant storage container using a plasma-supported coating process to prevent gas permeation. Although the thickness of such a diffusion barrier layer may be lower than the thickness of a layer made of a resin material, this prior art only applies to pressure-resistant storage containers having a reinforced body made in one piece. This is not satisfactory because not all the pressure-resistant storage containers have a reinforced body made in one piece.

In view of the above, there exists a need for a gas-tight Type V pressure vessel having a gas barrier layer which does not reduce the storage volume available for the gas, which does not increase the weight of the pressure vessel, which is not slow to apply on an inner surface of the pressure vessel, and which is compatible with any type of pressure vessel structure.

### Summary of the invention

The present invention provides a Type V pressure vessel comprising an external composite structure enclosing or encasing an internal composite structure, wherein the internal composite structure comprises:
- a first inner surface defining an internal gas storage chamber,
- a first gas barrier metal layer made from a first metallic material deposited on the first inner surface using a plasma-based metal deposition process,
- a cylindrical central part, and
- a boss assembly coupled to the cylindrical central part by means of a first coupling means, the boss assembly comprises a dome-shaped cap and a boss part coupled to the dome-shaped cap by means of a second coupling means.

Due to the fact that a gas barrier metal layer offers a better gas-tightness than a gas resin barrier layer having the same thickness, the invention allows reducing the thickness of the gas barrier layer to the region of 5 to 600 nm, preferably between 5 to 100 nm. By reducing the thickness of the gas barrier layer, it is also possible to reduce the weight of the pressure vessel.

The invention further allows a reduction of manufacturing time since the time required for applying a gas barrier metal layer onto an inner surface by using a plasma-based metal deposition process is shorter than the time required for applying a resin material onto the same inner surface.

The external composite structure allows the Type V pressure vessel to be more rigid and mechanically stable.

Coupling the boss assembly to the cylindrical central part allows the internal composite structure to be a prefabricated internal composite structure with separate elements coupled on site.

The first coupling means is selected from the group consisting of bonding means, adhesive means, welding means (includes friction means), screwing means, snap-fit means, press-fit means and combination thereof.

Coupling the boss part to the dome-shaped cap allows the boss assembly to be a prefabricated boss assembly with separate elements coupled on site.

The second coupling means is selected from the group consisting of bonding means, adhesive means, welding means (includes friction means), screwing means, snap-fit means, press-fit means, stop means and combination thereof.

Therefore, the invention is compatible with any type of pressure vessel structure, regardless of the number of pieces or separate elements forming the internal composite structure, thus allowing modular assembly of the internal composite structure while ensuring good gas-tightness.

By the expression "gas barrier metal layer", it is meant a metal layer which is impermeable and chemically inert to the gas stored in the internal gas storage chamber. The gas barrier metal layer should preferably have an elongation at break higher than the elongation of the first inner surface, in all conditions. Typically, the elongation at break of the gas barrier metal layer is above 1%, preferably above 2%.

A "plasma-based metal deposition process" is, for example, a physical vapor deposition (as known as PVD) process wherein a plasma formed from an inert gas, i.e. unreactive gas, with the metal target, is ignited in a reaction chamber under high vacuum conditions. Argon is an example of such an inert gas. A PVD is carried out, for example, by cathode atomization (as known as sputtering) and/or internal and external arc vaporization, external thermal and electron beam vaporization. Advantageously, the metal layer is then oxidized by a plasma process, e.g. by radio-frequency discharge (as known as RF discharge), to form an additional Al₂O₃ gas barrier layer on the first inner surface. A known alternative to plasma deposition under high vacuum conditions is plasma deposition at atmospheric pressure.

According to a preferred embodiment, the dome-shaped cap comprises a base part, and the boss assembly is coupled to the cylindrical central part through the base part. This arrangement allows modular assembly of an internal composite structure comprising a dome-shaped cap having a base part.

According to a particularly preferred embodiment, the cylindrical central part is formed from at least two cylindrical parts, and the boss assembly comprises a cylindrical part connected to a base part of the dome-shaped cap so that the boss assembly is coupled to the cylindrical central part through a cylindrical part. This arrangement allows modular assembly of an internal composite structure comprising a dome-shaped cap having a base part and a cylindrical part extending axially from the base part. In such an embodiment, the invention encompasses a Type V pressure vessel comprising an internal composite structure made of two complementary halves, each half comprising a dome-shaped cap having a base part and a cylindrical part extending axially from the base part to an end part of the half, the end part of one half being coupled to the end part of the other half.

According to a preferred embodiment, the gas is a dihydrogen gas. This allows the Type V pressure vessel to be used in a fuel cell electric vehicle (as known as FCEV).

According to a preferred embodiment, the external composite structure consists of a winding of layers of fiber-reinforced composite material. This allows the external composite structure to have an optimal ratio of strength and stiffness relative to its weight.

In a preferred embodiment, the fiber-reinforced composite material comprises a matrix selected from the group consisting of thermoset resin and thermoplastic polymer. Preferably, the fiber-reinforced composite material comprises a thermoset resin matrix.

A thermoset resin is formed by mixing two or more reactive components forming a reactive thermoset precursor, which reacts upon exposure to curing conditions (e.g. heat, UV or other radiations, or simply by contacting them with one another, etc.) to form the thermoset resin. The thermoset resin must be fully cured to yield high performance composites. Once cured, the thermoset resin is solid and cannot be further processed or reshaped as the resin is unable to flow anymore. Examples of thermoset resins include unsaturated polyester, epoxy, vinyl ester, polyurea, isocyanurate, and polyurethane resins. It is possible to produce thermoset prepregs made of fibers impregnated with a reactive resin which has been only partially cured to make it tacky, but still soft. The prepregs can be stored and later further processed under pressure by heating or exposing the resin to UV to complete curing and consolidating the prepregs.

A thermoplastic polymer can change from a solid state (or non-flowable state) to a liquid state (or flowable state) and reverse by increasing and lowering the temperature, respectively. In case of semi-crystalline polymers, lowering the temperature of the thermoplastic drives the formation of crystals and the solidification of the thermoplastic. Inversely, heating a semi-crystalline polymer above the melting temperature thereof melts the crystals and the thermoplastic can flow. Examples of semi-crystalline thermoplastics include polyether ketones such as polyether ether ketone (PEEK), polyether ketone ketone (PEKK), poly ether ketone ketone ether ketone (PEKKEK), polyamides, such as polyamide 6 (PA6), polyamide 66 (PA66), polyamide 10 (PA10), polyamide 11 (PA11), polyamide 12 (PA12), polyolefins such as polyethylene (PE), polypropylene (PP), and the like. Amorphous thermoplastics do not form crystals and do not have a melting temperature. The amorphous thermoplastics solidify or become flowable depending on whether the material temperature is below or above the glass transition temperature thereof. Examples of amorphous thermoplastics include polyetherimide (PEI), polysulfone (PSU), polyethersulfone (PES), polycarbonate (PC), polystyrene (PS), thermoplastic polyurethane (TPU), and the like. Both semi-crystalline and amorphous thermoplastics can therefore be reshaped by heating them above their melting or glass transition temperatures and frozen into their new shape by lowering the temperature accordingly. Even though not strictly correct from a physical point of view, for sake of simplicity, both semi-crystalline and amorphous thermoplastics in a liquid state are herein referred to as a "thermoplastic melt".

In a preferred embodiment, the fibers of the fiber-reinforced composite material are fibers selected from the group consisting of carbon fibers, aramid fibers, basalt fibers and glass fibers. This allows for a good compromise between weight reduction and mechanical strength of the fiber-reinforced composite material.

In a preferred embodiment, the fibers of the fiber-reinforced composite material used for manufacturing the external composite structure are continuous fibers with high modulus, e.g. 250 GPa. This further improves the mechanical strength of the fiber-reinforced composite material.

Preferably, the cylindrical central part consists of a winding of layers of fiber-reinforced composite material. This allows the cylindrical central part to have an optimal ratio of strength and stiffness relative to its weight.

Preferably, the dome-shaped cap consists of a winding of layers of fiber-reinforced composite material. This allows the dome-shaped cap to have an optimal ratio of strength and stiffness relative to its weight.

According to one particularly preferred embodiment, the boss part is a polar boss comprising a neck part including an axial cylindrical hollow portion providing a gas communication port for charging and discharging a gas into and out of the internal gas storage chamber.

According to a particular embodiment of the invention, the dome-shaped cap has a second inner surface having a second gas barrier metal layer made from a second metallic material deposited on the second inner surface using a plasma-based metal deposition process. This adds a thin gas-tight surface between the boss part and the dome-shaped cap. Thus, by combining the first and second gas barrier metal layers in the boss assembly region, it is possible to form a gas barrier metal layer with higher gas-tightness in said region.

Preferably, the first metallic material and/or the second metallic material is selected from the group consisting of aluminum (Al), copper (Cu), steel, silicon oxide (SiO₂), silicon nitride (Si₃N₄), titanium nitride (TiNₓ), zirconium nitride (ZrN), zirconium carbide (ZrC), zirconium carbonitride (ZrCN), titanium oxide (TiO₂), copper aluminum oxide (CuAlO₂, CuAl₂O₄) and their alloys. This allows the gas barrier metal layer to be thin while also having a good elongation at break.

It is also provided according to the invention a method of manufacturing a Type V pressure vessel comprising the steps of:
- providing a cylindrical central part,
- providing a boss assembly comprising a boss part coupled to a dome-shaped cap,
- coupling the boss assembly to the cylindrical central part so as to form an internal composite structure,
- manufacturing an external composite structure over the internal composite structure,
- applying onto a first inner surface of the internal composite structure a first gas barrier metal layer made from a first metallic material deposited on the first inner surface using a plasma-based metal deposition process.

It is also provided according to the invention a method of manufacturing a gas-tight boss assembly for the above-mentioned Type V pressure vessel. The method comprises the steps of:
- providing a dome-shaped cap having a second inner surface,
- applying a second gas barrier metal layer onto the second inner surface of the dome-shaped cap, the second gas barrier metal layer being made from a second metallic material deposited on the second inner surface using a plasma-based metal deposition process,
- coupling in a gas-tight manner a boss part to the dome-shaped cap so as to form a gas-tight boss assembly.

Advantageously, the step of coupling in a gas-tight manner the boss part to the dome-shaped cap includes the steps of:
- providing a boss part comprising a neck part,
- passing the neck part of the boss part through a seal and an axial opening in the dome-shaped cap,
- coupling the boss part to the dome-shaped cap by means of the second coupling means so as to sandwich the dome-shaped cap between the second coupling means and the seal.

In a particular example, the second coupling means comprises a nut and an external screw thread arranged on the neck part so the step of coupling the boss part to the dome-shaped cap consists in screwing the nut onto the external screw thread of the neck part so as to sandwich the dome-shaped cap between the nut and the seal.

In an alternative embodiment, the step of coupling in a gas-tight manner the boss part to the dome-shaped cap includes the steps of:
- providing a boss part,
- deposing a gas-tight material on the boss part,
- passing the boss part through an axial opening in the dome-shaped cap,
- coupling the boss part to the dome-shaped cap by means of the second coupling means so as to sandwich the dome-shaped cap between the second coupling means and the gas-tight material.

In another alternative embodiment, the step of coupling in a gas-tight manner the boss part to the dome-shaped cap includes the steps of:
- providing a boss part,
- passing the boss part through an axial opening in the dome-shaped cap,
- coupling the boss part to the dome-shaped cap by means of the second coupling means so as to create a cavity between the boss part and the dome-shaped cap,
- injecting a gas-tight material inside the cavity.

In a particular example, the gas-tight material is injected in the cavity through a hole arranged in the boss part. The hole of the boss part can subsequently be closed by a closing means (e.g. screw, plug).

It is also provided according to the invention a vehicle comprising a Type V pressure vessel as presented above.

### Brief description of the drawings

Figure 1 is a general view of a vehicle according to the invention;
Figures 2a-2b are schematic cross sections of a pressure vessel according to the prior art;
Figure 3 is a schematic cross section of a pressure vessel according to one embodiment of the invention;
Figures 4a-4e are schematic cross sections of the pressure vessel shown in Figure 3 at various steps of its manufacturing;
Figures 5a-5c are schematic cross sections of a boss assembly at various steps of its manufacturing;
Figure 6 is a partial schematic cross section of a pressure vessel according to the invention equipped with the boss assembly shown in Figure 5c;
Figures 7 is a schematic cross section of a pressure vessel according to another embodiment of the invention;
Figures 8 is a variant form of the embodiment shown in Figure 7.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

In the present description, it is possible to index certain elements or parameters, such as for example first element or second element as well as first parameter and second parameter, or first criterion and second criterion, and so on. In this case, it is a simple indexing for differentiate and name elements or parameters or criteria that are close but not identical. This indexing does not imply a priority of one element, parameter or criterion with respect to another, and it is easy to interchange such denominations without departing from the scope of the present description. This indexing does not imply an order in time either.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

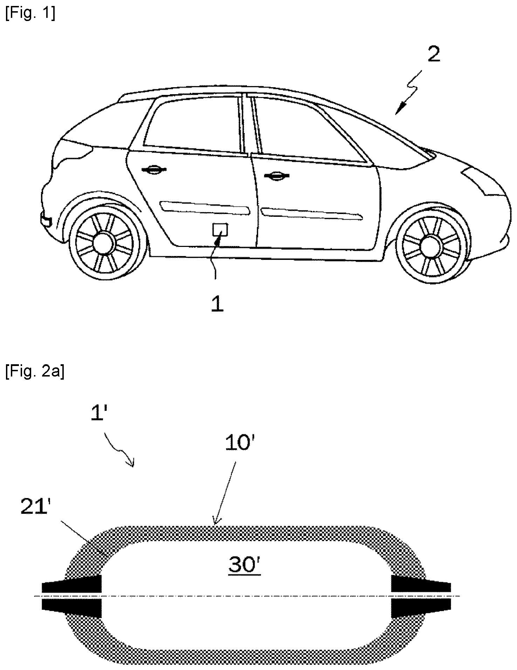

Figure 1 represents a fuel cell electric vehicle 2 comprising a Type V pressure vessel 1 configured for containing a gas under high pressure. In this example, the Type V pressure vessel 1 contains dihydrogen gas for powering the fuel cell of the vehicle 2. By the expression "pressure vessel", it is meant a vessel intended for storing gas under pressure able to withstand an internal pressure going up to 700 bar. For example, the pressure vessel may be compliant with Addendum 133 - Regulation No. 134 of the *"Agreement Concerning the Adoption of Uniform Technical Prescriptions for Wheeled Vehicles, Equipment and Parts which can be Fitted and*/*or be Used on Wheeled Vehicles and the Conditions for Reciprocal Recognition of Approvals Granted on the Basis of these Prescriptions"* issued by the United Nations.

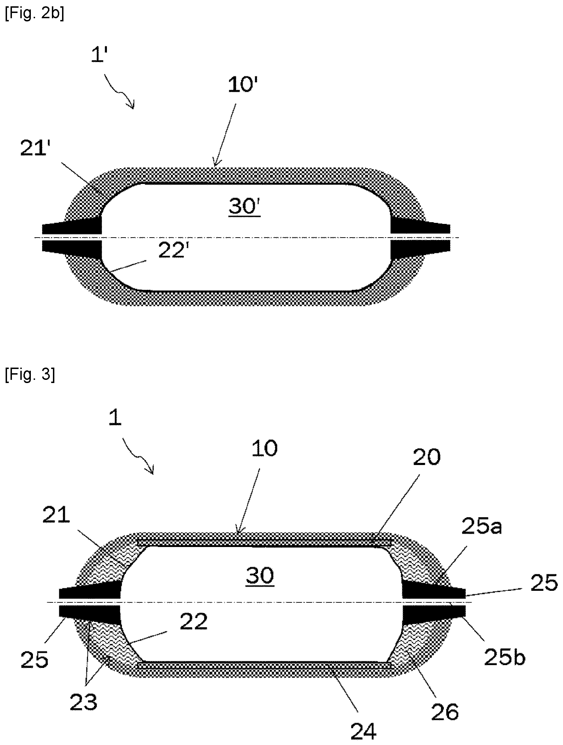

Figure 2b represents a known Type V pressure vessel 1' comprising an external composite structure 10' having an inner surface 21' defining an internal gas storage chamber 30' and having a gas barrier metal layer 22' made from a metallic material deposited on the inner surface 21' using a plasma-based metal deposition process.

Figures 2a-2billustrates a method of manufacturing a known Type V pressure vessel 1'. The method comprises the steps of:
- providing an external composite structure 10',
- applying a gas barrier metal layer 22' onto an inner surface 21' of the external composite structure 10', the gas barrier metal layer 22' being made from a metallic material deposited on the inner surface 21' using a plasma-based metal deposition process.

Figure 3 represents a Type V pressure vessel 1 according to one embodiment of the invention. The Type V pressure vessel 1 comprises an external composite structure 10 enclosing or encasing an internal composite structure 20. The internal composite structure 20 comprises:
- a first inner surface 21 defining an internal gas storage chamber 30,
- a first gas barrier metal layer 22 made from a first metallic material deposited on the first inner surface 21 using a plasma-based metal deposition process,
- a cylindrical central part 24, and
- a boss assembly 23 coupled to the cylindrical central part 24 by means of a first coupling means (not shown), the boss assembly 23 comprises a dome-shaped cap 26 and a boss part 25 coupled to the dome-shaped cap 26 by means of a second coupling means (not shown).

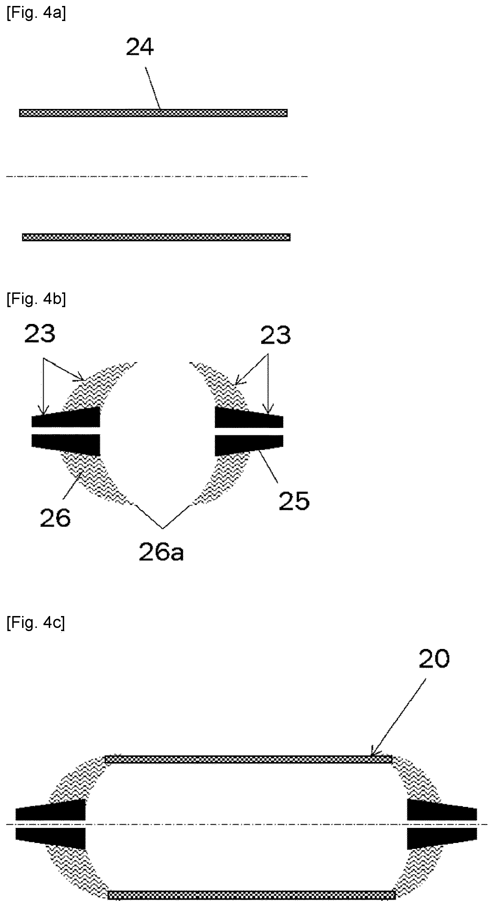

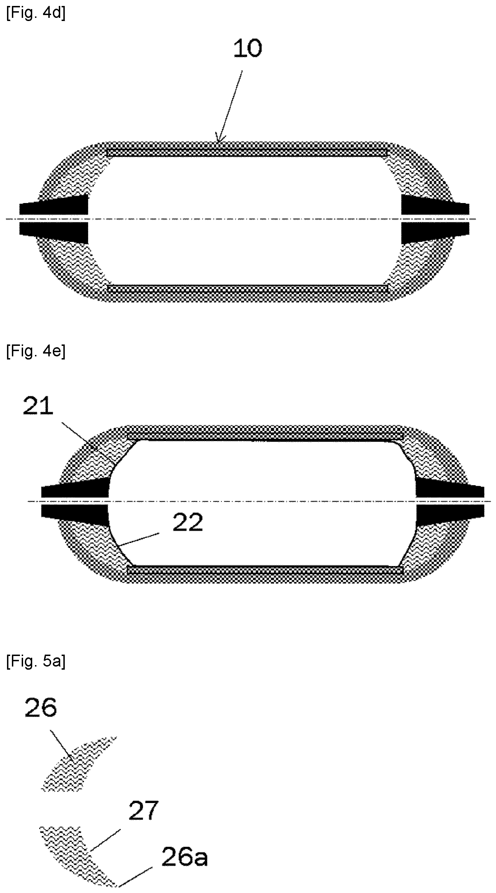

In the embodiment illustrated in Figure 3, the internal composite structure 20 is made of three separate elements coupled together. The three separate elements are two dome-shaped cap 26 and one cylindrical central part 24, each dome-shaped cap 26 comprising a base part 26a (see Figures 4b and 5a). The boss assembly 23 is coupled to an axial end of the cylindrical central part 24 through the base part 26a. In this embodiment, there are two first coupling means, one first coupling means is arranged at the interface between one axial end of the cylindrical central part 24 and the base part 26a of one dome-shaped cap 26, and the other first coupling means is arranged at the interface between the other axial end of the cylindrical central part 24 and the base part 26a of the other dome-shaped cap 26.

In a preferred embodiment, the external composite structure 10 consists of a winding of layers of fiber-reinforced composite material. Preferably, the fiber-reinforced composite material comprises a thermoset resin matrix.

Preferably, the cylindrical central part 24 consists of a winding of layers of fiber-reinforced composite material.

Preferably, the dome-shaped cap 26 consists of a winding of layers of fiber-reinforced composite material.

In one particularly preferred embodiment, the boss part 25 is a polar boss comprising a neck part 25a including an axial cylindrical hollow portion 25b providing a gas communication port for charging and discharging a gas into and out of the internal gas storage chamber 30.

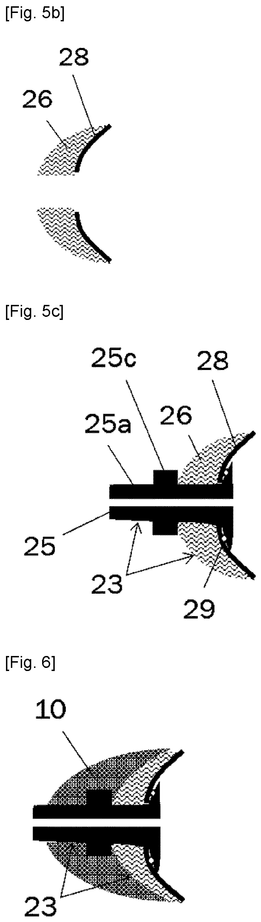

In the example of Figures 5a and 5b, the dome-shaped cap 26 has a second inner surface 27 having a second gas barrier metal layer 28 made from a second metallic material deposited on the second inner surface 27 using a plasma-based metal deposition process.

Preferably, the first metallic material and/or the second metallic material is selected from the group consisting of aluminum (Al), copper (Cu), steel, silicon oxide (SiO₂), silicon nitride (Si₃N₄), titanium nitride (TiNₓ), zirconium nitride (ZrN), zirconium carbide (ZrC), zirconium carbonitride (ZrCN), titanium oxide (TiO₂), copper aluminum oxide (CuAlO₂, CuAl₂O₄) and their alloys.

Advantageously, whether for the external composite structure 10, the cylindrical central part 24 or the dome-shaped cap 26, the fiber-reinforced composite material may either be pre-impregnated and cured after being laid or not be pre-impregnated and impregnated by, for example, a resin infusion process or a resin transfer molding process, commonly called a RTM process. During such processes, the curing of the composite material takes place while the composite material remains inside the resin infusion tool or the resin transfer mold. It should be noted that the RTM process permits to obtain an extra smooth outer surface of the external composite structure 10, the cylindrical central part 24 or the dome-shaped cap 26 with decreased internal stresses.

As illustrated in Figures 4a to 4e, the present invention also concerns a method of manufacturing the above-described Type V pressure vessel 1. The method comprises the steps of:
- providing a cylindrical central part 24,
- providing a boss assembly 23 comprising a boss part 25 coupled to a dome-shaped cap 26,
- coupling the boss assembly 23 to the cylindrical central part 24 so as to form an internal composite structure 20,
- manufacturing an external composite structure 10 over the internal composite structure 20,
- applying onto a first inner surface 21 of the internal composite structure 20 a first gas barrier metal layer 22 made from a first metallic material deposited on the first inner surface 21 using a plasma-based metal deposition process.

As illustrated in Figures 5a to 5c, the present invention also concerns a method of manufacturing a boss assembly 23 for the above-described Type V pressure vessel 1. The method comprises the steps of:
- providing a dome-shaped cap 26 having a second inner surface 27,
- applying a second gas barrier metal layer 28 onto the second inner surface 27 of the dome-shaped cap 26, the second gas barrier metal layer 28 being made from a second metallic material deposited on the second inner surface 27 using a plasma-based metal deposition process,
- coupling in a gas-tight manner a boss part 25 to the dome-shaped cap 26.

Advantageously, the step of coupling in a gas-tight manner the boss part 25 to the dome-shaped cap 26 includes the steps of:
- providing a boss part 25 comprising a neck part 25a having an external screw thread,
- passing the neck part 25a of the boss part 25 through a seal 29 and an axial opening in the dome-shaped cap 26,
- screwing a nut 25c onto the external screw thread of the neck part 25a so as to sandwich the dome-shaped cap 26 between the nut 25c and the seal 29. In this example, the nut 25c together with the external screw thread on the neck part 25a constitute the second coupling means.

Figure 6 shows the boss assembly 23 of Figure 5c with a part of an external composite structure 10 of the Type V pressure vessel 1.

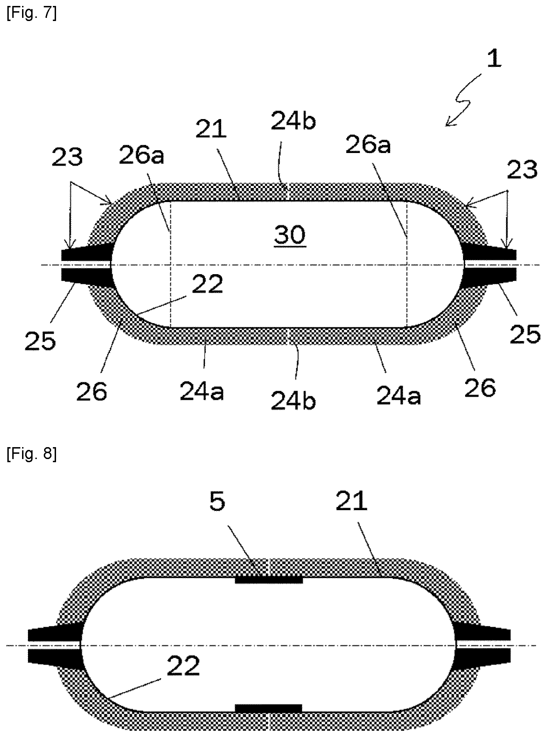

Figure 7 represents a Type V pressure vessel 1 according to another embodiment of the invention. In this embodiment, the cylindrical central part 24 is formed from two cylindrical parts 24a. The boss assembly 23 comprises a cylindrical part 24a connected to a base part 26a of the dome-shaped cap 26 so that the boss assembly 23 is coupled to the cylindrical central part 24 through a cylindrical part 24a. In the illustrated example, the internal composite structure 20 is made of two separate elements coupled together. The two separate elements are two complementary halves, each half comprising a dome-shaped cap 26 having a base part 26a and a cylindrical part 24a extending axially from the base part 26a to an end part 24b of the half, the end part 24b of one half being coupled to the end part 24b of the other half by means of one first coupling means arranged at the interface between the two cylindrical parts 24a.

Advantageously, each half consists of a winding of layers of fiber-reinforced composite material.

Preferably, the fiber-reinforced composite material comprises a thermoset resin matrix.

Figure 8 represents a variant of the construction of the Type V pressure vessel shown in Figure 7. In this embodiment, the first coupling means arranged at the interface between the two cylindrical parts 24a is reinforced by a tubular member 5. The tubular member 5 is made of plastic material and comprises an outer surface, an inner surface and two radial surfaces. The first inner surface 21 includes the inner surface of the tubular member 5 and its two radial surfaces.

Advantageously, a cavity is provided between the tubular member 5 and the two cylindrical parts 24a (not shown). A gas-tight material is injected into the cavity in order to achieve the gas-tightness of the cylindrical central part 24 at the interface between the two cylindrical parts 24a. The gas-tight material is injected into the cavity from outside the cylindrical central part 24.

Figures 7 and 8 do not show the external composite structure 10.

The here-above embodiments are illustrative and not restrictive embodiments. Obviously, many modifications and variations of the present invention are possible in the light of the above teachings without deviating from its inventive concept. It has therefore to be understood that the invention may be practiced otherwise that as specifically described.

### List of references

1, 1': Type V pressure vessel
2: fuel cell electric vehicle
5: tubular member
10, 10': external composite structure
20: internal composite structure
21: first inner surface
21': inner surface
22: first gas barrier metal layer
22': gas barrier metal layer
23: boss assembly
24: cylindrical central part
24a: cylindrical part
24b: end part
25: boss part
25a: neck part
25b: axial cylindrical hollow portion
25c: nut
26: dome-shaped cap
26a: base part
27: second inner surface
28: second gas barrier metal layer
29: seal
30, 30': internal gas storage chamber

## Claims

1. Type V pressure vessel (1) comprising an external composite structure (10) enclosing or encasing an internal composite structure (20), wherein the internal composite structure (20) comprises:
- a first inner surface (21) defining an internal gas storage chamber (30),
- a first gas barrier metal layer (22) made from a first metallic material deposited on the first inner surface (21) using a plasma-based metal deposition process,
- a cylindrical central part (24),
**characterized in that** the internal composite structure (20) comprises:
- a boss assembly (23) coupled to the cylindrical central part (24) by means of a first coupling means, the boss assembly (23) comprises a dome-shaped cap (26) and a boss part (25) coupled to the dome-shaped cap (26) by means of a second coupling means.

2. Type V pressure vessel (1) according to claim 1, wherein the dome-shaped cap (26) comprises a base part (26a), and the boss assembly (23) is coupled to the cylindrical central part (24) through the base part (26a).

3. Type V pressure vessel (1) according to claim 1, wherein the cylindrical central part (24) is formed from at least two cylindrical parts (24a), and the boss assembly (23) comprises a cylindrical part (24a) connected to a base part (26a) of the dome-shaped cap (26) so that the boss assembly (23) is coupled to the cylindrical central part (24) through a cylindrical part (24a).

4. Type V pressure vessel (1) according to any one of claims 1 to 3, wherein the external composite structure (10) consists of a winding of layers of fiber-reinforced composite material.

5. Type V pressure vessel (1) according to any one of claims 1 to 4, wherein the cylindrical central part (24) consists of a winding of layers of fiber-reinforced composite material, wherein preferably the dome-shaped cap (26) consists of a winding of layers of fiber-reinforced composite material.

6. Type V pressure vessel (1) according to any one of claims 4 to 5, wherein the fiber-reinforced composite material comprises a matrix selected from the group consisting of thermoset resin and thermoplastic polymer, preferably, the fiber-reinforced composite material comprises a thermoset resin matrix.

7. Type V pressure vessel (1) according to any one of claims 1 to 6, wherein the boss part (25) is a polar boss comprising a neck part (25a) including an axial cylindrical hollow portion (25b) providing a gas communication port for charging and discharging a gas into and out of the internal gas storage chamber (30).

8. Type V pressure vessel (1) according to any one of claims 1 to 7, wherein the dome-shaped cap (26) has a second inner surface (27) having a second gas barrier metal layer (28) made from a second metallic material deposited on the second inner surface (27) using a plasma-based metal deposition process.

9. Type V pressure vessel (1) according to any one of claims 1 to 8, wherein the first metallic material and/or the second metallic material is selected from the group consisting of aluminum (Al), copper (Cu), steel, silicon oxide (SiO₂), silicon nitride (Si₃N₄), titanium nitride (TiNₓ), zirconium nitride (ZrN), zirconium carbide (ZrC), zirconium carbonitride (ZrCN), titanium oxide (TiO₂), copper aluminum oxide (CuAlO₂, CuAl₂O₄) and their alloys.

10. Method of manufacturing a Type V pressure vessel (1) according to any one of claim 1 to 9, the method comprises the steps of:
- providing a cylindrical central part (24),
- providing a boss assembly (23) comprising a boss part (25) coupled to a dome-shaped cap (26),
- coupling the boss assembly (23) to the cylindrical central part (24) so as to form an internal composite structure (20),
- manufacturing an external composite structure (10) over the internal composite structure (20),
- applying onto a first inner surface (21) of the internal composite structure (20) a first gas barrier metal layer (22) made from a first metallic material deposited on the first inner surface (21) using a plasma-based metal deposition process.

11. Method of manufacturing a gas-tight boss assembly (23) for a Type V pressure vessel (1) according to any one of claims 1 to 9, the method comprises the steps of:
- providing a dome-shaped cap (26) having a second inner surface (27),
- applying a second gas barrier metal layer (28) onto the second inner surface (27) of the dome-shaped cap (26), the second gas barrier metal layer (28) being made from a second metallic material deposited on the second inner surface (27) using a plasma-based metal deposition process,
- coupling in a gas-tight manner a boss part (25) to the dome-shaped cap (26) so as to form a gas-tight boss assembly (23).

12. Method according to claim 11, wherein the step of coupling in a gas-tight manner the boss part (25) to the dome-shaped cap (26) includes the steps of:
- providing a boss part (25) comprising a neck part (25a),
- passing the neck part (25a) of the boss part (25) through a seal (29) and an axial opening in the dome-shaped cap (26),
- coupling the boss part (25) to the dome-shaped cap (26) by means of the second coupling means so as to sandwich the dome-shaped cap (26) between the second coupling means and the seal (29).

13. Method according to claim 11, wherein the step of coupling in a gas-tight manner the boss part (25) to the dome-shaped cap (26) includes the steps of:
- providing a boss part (25),
- deposing a gas-tight material on the boss part (25),
- passing the boss part (25) through an axial opening in the dome-shaped cap (26),
- coupling the boss part (25) to the dome-shaped cap (26) by means of the second coupling means so as to sandwich the dome-shaped cap (26) between the second coupling means and the gas-tight material.

14. Method according to claim 11, wherein the step of coupling in a gas-tight manner the boss part (25) to the dome-shaped cap (26) includes the steps of:
- providing a boss part (25),
- passing the boss part (25) through an axial opening in the dome-shaped cap (26),
- coupling the boss part (25) to the dome-shaped cap (26) by means of the second coupling means so as to create a cavity between the boss part (25) and the dome-shaped cap (26),
- injecting a gas-tight material inside the cavity.

15. Vehicle comprising a Type V pressure vessel (1) according to any one of claims 1 to 9.

## Patentansprüche

1. Druckbehälter (1) des Typs V, der eine äußere Verbundstruktur (10) aufweist, die eine innere Verbundstruktur (20) einschließt oder umhüllt, wobei die innere Verbundstruktur (20) aufweist:
- eine erste Innenfläche (21), die eine innere Gasspeicherkammer (30) begrenzt,
- eine erste Gasbarriere-Metallschicht (22), die aus einem ersten metallischen Material hergestellt ist, das auf der ersten Innenfläche (21) unter Verwendung eines plasmabasierten Metallabscheidungsverfahrens abgeschieden wird,
- ein zylindrisches Mittelteil (24),
**dadurch gekennzeichnet, dass** die innere Verbundstruktur (20) aufweist:
- eine Nabenbaugruppe (23), die mit dem zylindrischen Mittelteil (24) mittels eines ersten Verbindungsmittels verbunden ist, wobei die Nabenbaugruppe (23) eine kuppelförmige Kappe (26) und einen Nabenteil (25) aufweist, der mit der kuppelförmigen Kappe (26) mittels eines zweiten Verbindungsmittels verbunden ist.

2. Druckbehälter (1) des Typs V nach Anspruch 1, wobei die kuppelförmige Kappe (26) ein Basisteil (26a) aufweist und die Nabenbaugruppe (23) über das Basisteil (26a) mit dem zylindrischen Mittelteil (24) verbunden ist.

3. Druckbehälter (1) des Typs V nach Anspruch 1, wobei der zylindrische Mittelteil (24) aus mindestens zwei zylindrischen Teilen (24a) gebildet ist und die Nabenbaugruppe (23) einen zylindrischen Teil (24a) aufweist, der mit einem Basisteil (26a) der kuppelförmigen Kappe (26) verbunden ist, so dass die Nabenbaugruppe (23) durch einen zylindrischen Teil (24a) mit dem zylindrischen Mittelteil (24) verbunden ist.

4. Druckbehälter (1) des Typs V nach einem der Ansprüche 1 bis 3, wobei die äußere Verbundstruktur (10) aus einer Wicklung von Schichten aus faserverstärktem Verbundmaterial besteht.

5. Druckbehälter (1) des Typs V nach einem der Ansprüche 1 bis 4, wobei der zylindrische Mittelteil (24) aus einer Wicklung von Lagen aus faserverstärktem Verbundmaterial besteht, wobei vorzugsweise die kuppelförmige Kappe (26) aus einer Wicklung von Lagen aus faserverstärktem Verbundmaterial besteht.

6. Druckbehälter (1) des Typs V nach einem der Ansprüche 4 bis 5, wobei das faserverstärkte Verbundmaterial eine Matrix aus der Gruppe bestehend aus duroplastischem Harz und thermoplastischem Polymer aufweist, vorzugsweise weist das faserverstärkte Verbundmaterial eine duroplastische Harzmatrix auf.

7. Druckbehälter (1) des Typs V nach einem der Ansprüche 1 bis 6, bei dem das Nabenteil (25) ein polares Nabenteil ist, das ein Halsteil (25a) mit einem axialen zylindrischen hohlen Abschnitt (25b) aufweist, der eine Gasverbindungsöffnung zum Einfüllen und Entleeren eines Gases in die und aus der inneren Gasspeicherkammer (30) bereitstellt.

8. Druckbehälter (1) des Typs V nach einem der Ansprüche 1 bis 7, wobei die kuppelförmige Kappe (26) eine zweite Innenfläche (27) mit einer zweiten Gasbarriere-Metallschicht (28) aufweist, die aus einem zweiten metallischen Material hergestellt ist, das auf der zweiten Innenfläche (27) unter Verwendung eines plasmabasierten Metallabscheidungsverfahrens abgeschieden wurde.

9. Druckbehälter (1) des Typs V nach einem der Ansprüche 1 bis 8, wobei das erste metallische Material und/oder das zweite metallische Material ausgewählt ist aus der Gruppe bestehend aus Aluminium (AI), Kupfer (Cu), Stahl, Siliziumoxid (SiOz), Siliziumnitrid (Si3N4), Titannitrid (TiNx), Zirkoniumnitrid (ZrN), Zirkoniumcarbid (ZrC), Zirkoniumcarbonitrid (ZrCN), Titanoxid (TiOz), Kupferaluminiumoxid (CuAlOz, CuAl204) und deren Legierungen.

10. Verfahren zur Herstellung eines Druckbehälters (1) des Typs V nach einem der Ansprüche 1 bis 9, wobei das Verfahren die folgenden Schritte umfasst:
- Bereitstellen eines zylindrischen Mittelteils (24),
- Bereitstellen einer Nabenbaugruppe (23) mit einem Nabenteil (25), das mit einer kuppelförmigen Kappe (26) verbunden ist,
- Verbinden der Nabenbaugruppe (23) mit dem zylindrischen Mittelteil (24), um eine innere Verbundstruktur (20) zu bilden,
- Herstellen einer äußeren Verbundstruktur (10) über der inneren Verbundstruktur (20),
- Aufbringen einer ersten Gasbarriere-Metallschicht (22) auf eine erste Innenfläche (21) der inneren Verbundstruktur (20), die aus einem ersten metallischen Material hergestellt ist, das auf der ersten Innenfläche (21) unter Verwendung eines plasmabasierten Metallabscheidungsverfahrens abgeschieden wurde.

11. Verfahren zur Herstellung einer gasdichten Nabenbaugruppe (23) für einen Druckbehälter (1) des Typs V nach einem der Ansprüche 1 bis 9, wobei das Verfahren die folgenden Schritte umfasst:
- Bereitstellen einer kuppelförmigen Kappe (26) mit einer zweiten Innenfläche (27),
- Aufbringen einer zweiten Gasbarriere-Metallschicht (28) auf die zweite Innenfläche (27) der kuppelförmigen Kappe (26), wobei die zweite Gasbarriere-Metallschicht (28) aus einem zweiten metallischen Material hergestellt ist, das auf der zweiten Innenfläche (27) unter Verwendung eines plasmabasierten Metallabscheidungsverfahrens abgeschieden wird,
- gasdichtes Verbinden eines Nabenteils (25) mit der kuppelförmigen Kappe (26), um eine gasdichte Nabenbaugruppe (23) zu bilden.

12. Verfahren nach Anspruch 11, wobei der Schritt des gasdichten Verbindens des Nabenteils (25) mit der kuppelförmigen Kappe (26) die folgenden Schritte umfasst:
- Bereitstellen eines Nabenteils (25) mit einem Halsteil (25a),
- Durchführen des Halsteils (25a) des Nabenteils (25) durch eine Dichtung (29) und eine axiale Öffnung in der kuppelförmigen Kappe (26),
- Koppeln des Nabenteils (25) mit der kuppelförmigen Kappe (26) mittels des zweiten Kopplungsmittels, um die kuppelförmige Kappe (26) zwischen dem zweiten Kopplungsmittel und der Dichtung (29) einzuklemmen.

13. Verfahren nach Anspruch 11, wobei der Schritt des gasdichten Verbindens des Nabenteils (25) mit der kuppelförmigen Kappe (26) die folgenden Schritte umfasst:
- Bereitstellen eines Nabenteils (25),
- Aufbringen eines gasdichten Materials auf das Nabenteil (25),
- Durchführen des Nabenteils (25) durch eine axiale Öffnung in der kuppelförmigen Kappe (26),
- Koppeln des Nabenteils (25) mit der kuppelförmigen Kappe (26) mittels des zweiten Kopplungsmittels, um die kuppelförmige Kappe (26) zwischen dem zweiten Kopplungsmittel und dem gasdichten Material einzuklemmen.

14. Verfahren nach Anspruch 11, wobei der Schritt des gasdichten Verbindens des Nabenteils (25) mit der kuppelförmigen Kappe (26) die folgenden Schritte umfasst:
- Bereitstellen eines Nabenteils (25),
- Durchführen des Nabenteils (25) durch eine axiale Öffnung in der kuppelförmigen Kappe (26),
- Verbinden des Nabenteils (25) mit der kuppelförmigen Kappe (26) mit Hilfe des zweiten Kopplungsmittels, um einen Hohlraum zwischen dem Nabenteil (25) und der kuppelförmigen Kappe (26) zu schaffen,
- Einspritzen eines gasdichten Materials in den Hohlraum.

15. Fahrzeug mit einem Druckbehälter (1) des Typs V nach einem der Ansprüche 1 bis 9.

## Revendications

1. Réservoir sous pression de type V (1) comprenant une structure composite externe (10) renfermant ou enveloppant une structure composite interne (20), dans lequel la structure composite interne (20) comprend :
- une première surface intérieure (21) définissant une chambre interne de stockage de gaz (30),
- une première couche métallique barrière aux gaz (22) réalisée à partir d'un premier matériau métallique déposé sur la première surface intérieure (21) à l'aide d'un procédé de dépôt de métal à base de plasma,
- une partie centrale cylindrique (24),
**caractérisée en ce que** la structure composite interne (20) comprend :
- un ensemble de bossage (23) couplé à la partie centrale cylindrique (24) au moyen des premiers moyens d'accouplement, l'ensemble bossage (23) comprenant un capuchon en forme de dôme (26) et une pièce de bossage (25) couplée au capuchon en forme de dôme (26) au moyen des seconds moyens d'accouplement.

2. Réservoir sous pression de type V (1) selon la revendication 1, dans lequel le capuchon en forme de dôme (26) comprend une partie de base (26a), et l'ensemble de bossage (23) est couplé à la partie centrale cylindrique (24) par l'intermédiaire de la partie de base (26a).

3. Réservoir sous pression de type V (1) selon la revendication 1, dans lequel la partie centrale cylindrique (24) est formée d'au moins deux pièces cylindriques (24a), et l'ensemble bossage (23) comprend une pièce cylindrique (24a) reliée à une partie de base (26a) du capuchon en forme de dôme (26) de sorte que l'ensemble de bossage (23) est couplé à la partie centrale cylindrique (24) par l'intermédiaire d'une pièce cylindrique (24a).

4. Réservoir sous pression de type V (1) selon l'une quelconque des revendications 1 à 3, dans lequel la structure composite externe (10) consiste en un enroulement de couches de matériau composite renforcé de fibres.

5. Réservoir sous pression de type V (1) selon l'une quelconque des revendications 1 à 4, dans lequel la partie centrale cylindrique (24) est constituée d'un enroulement de couches de matériau composite renforcé de fibres, dans lequel de préférence le capuchon en forme de dôme (26) consiste en un enroulement de couches de matériau composite renforcé de fibres.

6. Réservoir sous pression de type V (1) selon l'une quelconque des revendications 4 à 5, dans lequel le matériau composite renforcé de fibres comprend une matrice choisie dans le groupe comprenant une résine thermodurcissable et un polymère thermoplastique, de préférence, le matériau composite renforcé de fibres comprend une matrice de résine thermodurcissable.

7. Réservoir sous pression de type V (1) selon l'une quelconque des revendications 1 à 6, dans lequel la pièce de bossage (25) est un bossage polaire comprenant une partie de col (25a) comprenant une partie creuse cylindrique axiale (25b) fournissant un port de communication de gaz pour charger et décharger un gaz à l'intérieur et à l'extérieur de la chambre interne de stockage de gaz (30).

8. Réservoir sous pression de type V (1) selon l'une quelconque des revendications 1 à 7, dans lequel le capuchon en forme de dôme (26) présente une seconde surface intérieure (27) ayant une seconde couche métallique barrière aux gaz (28) réalisée à partir d'un second matériau métallique déposé sur la seconde surface intérieure (27) à l'aide d'un procédé de dépôt de métal à base de plasma.

9. Réservoir sous pression de type V (1) selon l'une quelconque des revendications 1 à 8, dans lequel le premier matériau métallique et/ou le second matériau métallique est choisi dans le groupe comprenant l'aluminium (AI), le cuivre (Cu), l'acier, l'oxyde de silicium (SiO2), le nitrure de silicium (Si3N4), le nitrure de titane (TiNₓ), le nitrure de zirconium (ZrN), le carbure de zirconium (ZrC), le carbonitride de zirconium (ZrCN), l'oxyde de titane (TiO₂), l'oxyde de cuivre et d'aluminium (CuAlO₂, CuAl₂O₄) et leurs alliages.

10. Procédé de fabrication d'un réservoir sous pression de type V (1) selon l'une quelconque des revendications 1 à 9, le procédé comprend les étapes suivantes :
- fourniture d'une partie centrale cylindrique (24),
- fourniture d'un ensemble de bossage (23) comprenant une pièce de bossage (25) couplée à un capuchon en forme de dôme (26),
- couplage de l'ensemble de bossage (23) à la partie centrale cylindrique (24) de manière à former une structure composite interne (20),
- fabrication d'une structure composite externe (10) sur la structure composite interne (20),
- application sur une première surface intérieure (21) de la structure composite interne (20) d'une première couche métallique barrière aux gaz (22) réalisée à partir d'un premier matériau métallique déposé sur la première surface intérieure (21) à l'aide d'un procédé de dépôt de métal à base de plasma.

11. Procédé de fabrication d'un ensemble de bossage étanche au gaz (23) pour un réservoir sous pression de type V (1) selon l'une quelconque des revendications 1 à 9, le procédé comprend les étapes suivantes :
- fourniture d'un capuchon en forme de dôme (26) ayant une seconde surface intérieure (27),
- application d'une seconde couche métallique barrière aux gaz (28) sur la seconde surface intérieure (27) du capuchon en forme de dôme (26), la seconde couche métallique barrière aux gaz (28) étant réalisée à partir d'un second matériau métallique déposé sur la seconde surface intérieure (27) par un procédé de dépôt de métal à base de plasma,
- couplage de manière étanche au gaz d'une pièce de bossage (25) au capuchon en forme de dôme (26) de manière à former un ensemble de bossage étanche au gaz (23).

12. Procédé selon la revendication 11, dans lequel l'étape de couplage de manière étanche au gaz de la pièce de bossage (25) au capuchon en forme de dôme (26) comprend les étapes de :
- prévoyant une pièce de bossage (25) comprenant une partie de col (25a),
- passage de la partie de col (25a) de la partie de bossage (25) à travers un joint (29) et une ouverture axiale dans le capuchon en forme de dôme (26),
- couplage de la pièce de bossage (25) au capuchon en forme de dôme (26) au moyen des seconds moyens d'accouplement de manière à prendre en sandwich le capuchon en forme de dôme (26) entre les seconds moyens d'accouplement et le joint (29).

13. Procédé selon la revendication 11, dans lequel l'étape de couplage de manière étanche au gaz de la pièce de bossage (25) au capuchon en forme de dôme (26) comprend les étapes de :
- fourniture d'une pièce de bossage (25),
- dépôt d'un matériau étanche au gaz sur la pièce de bossage (25),
- passage de la pièce de bossage (25) à travers une ouverture axiale dans le capuchon en forme de dôme (26),
- couplage de la pièce de bossage (25) au capuchon en forme de dôme (26) au moyen des seconds moyens d'accouplement de manière à prendre en sandwich le capuchon en forme de dôme (26) entre les seconds moyens d'accouplement et le matériau étanche aux gaz.

14. Procédé selon la revendication 11, dans lequel l'étape de couplage de manière étanche au gaz de la pièce de bossage (25) au capuchon en forme de dôme (26) comprend les étapes de :
- fourniture d'une pièce de bossage (25),
- passage de la pièce de bossage (25) à travers une ouverture axiale dans le capuchon en forme de dôme (26),
- couplage de la pièce de bossage (25) au capuchon en forme de dôme (26) au moyen des seconds moyens d'accouplement de manière à créer une cavité entre la pièce de bossage (25) et le capuchon en forme de dôme (26),
- injection d'un matériau étanche aux gaz à l'intérieur de la cavité.

15. Véhicule comprenant un réservoir sous pression de type V (1) selon l'une quelconque des revendications 1 à 9.
